# EUROPEAN PATENT APPLICATION

(11) **EP 4 353 676 A1**
(43) Date of publication of application: **17.04.2024**
(21) Application number: 22201605.7
(22) Date of filing: 14.10.2022
(51) Int. Cl.: C01B 3/38, C01B 3/52, C01B 3/48, B01D 53/14

(54) **PLANT AND PROCESS FOR PRODUCING A CARBON DIOXIDE DEPLETED SYNTHESIS GAS PRODUCT BY STEAM REFORMING**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Rösch, Alexander, 60439 Frankfurt am Main (DE); Junger, Jasmin, 60439 Frankfurt am Main (DE)
(74) Representative: Dropsch, Holger

(57) **Abstract**

A process for producing a carbon dioxide depleted synthesis gas product by steam reforming is provided. The process includes cooling crude synthesis gas stream produced in a main reforming stage in a first cooling device (214, 314, 414, 514) and reacting in a carbon dioxide absorption column (216, 316, 416, 516), reacting a carbon dioxide loaded absorbent stream from the carbon dioxide absorption column (216, 316, 416, 516) in an absorbent regeneration column (224, 324, 424, 524), cooling the carbon dioxide enriched hot vapor stream from the absorbent regeneration column (224, 324, 424, 524) in a second cooling device (228, 328, 428, 528) and cooling a carbon dioxide depleted hot absorbent stream from the absorbent regeneration column (224, 324, 424, 524) in a third cooling device (236, 336, 436, 536). Preheated air streams from the cooling devices are fed as oxidant to the main reforming stage.

## Description

### TECHNICAL FIELD

The present invention relates generally to synthesis gas production by steam reforming; more specifically, the present invention relates to a plant and process for producing a carbon dioxide depleted synthesis gas product by steam reforming of hydrocarbon-containing feed gas, where a carbon dioxide capture system is integrated with a steam reformer system to increase overall efficiency of the synthesis gas production.

### BACKGROUND

Typically, the steam reforming process is used for producing hydrogen by reacting a feedstock with high-temperature steam in a steam reforming plant. After appropriate pretreatment (e.g., feedstock desulfurization and heating), the feedstock or feed gas, usually natural gas or naphtha, is passed over a catalyst with the addition of process steam for the conversion of the feedstock into synthesis gas. The synthesis gas produced consists predominantly of hydrogen (H₂), carbon dioxide (CO₂), carbon monoxide (CO), unreacted water, and unreacted feed gas. The hot synthesis gas is often fed to a carbon monoxide conversion step (CO Shift step), in order to increase the hydrogen yield of the process, where the carbon monoxide reacts with water to form the carbon dioxide and hydrogen. In the case of a plant also intended to produce carbon monoxide plant, the synthesis gas in not or only partially subjected to a carbon monoxide conversion step and subsequently is fed to a carbon dioxide scrubber and a cryogenic separation unit (coldbox (CB)). In a context of hydrogen plants, the carbon dioxide scrubber can also be used for decarbonization. The end product purification is accomplished by pressure swing adsorption (PSA), generating pure hydrogen gas and a residual gas. The residual gas is often used as fuel gas for firing steam reformers by fired heaters or burners.

Carbon dioxide from the synthesis gas enters the PSA residual gas. Carbon dioxide from the combustion of an entire fuel gas (residual gas and, if necessary, additional fuel gas, e.g., natural gas) of the steam reformer plant is released together into the environment via a flue gas stack. In the steam reformer plant, combustion air is usually preheated by cooling the flue gas. In some plants, the combustion air is already preheated before being drawn into an air blower which is done, for example, by means of condensation of low-pressure steam.

Generally, amine scrubbing is used to separate the carbon dioxide from a gas stream, e. g. a flue gas stream. The removed carbon dioxide is either released into the atmosphere at a safe location or discharged as a product over a plant boundary. The CO₂ containing gas is supplied to the bottom of a carbon dioxide absorber. In the carbon dioxide absorber column, the gas to be treated flows upward in countercurrent to an amine solution regenerated by flashing and stripping, which is fed at the top of the carbon dioxide absorber column. Purified synthesis gas leaves the carbon dioxide absorber column as overhead product and is optionally cooled in a synthesis gas cooler before being discharged into a downstream process unit for further processing.

The condensate produced downstream of the synthesis gas cooler is separated in the synthesis gas separator and fed back into an amine circuit. The amine solution loaded with carbon dioxide is expanded from the bottom of the carbon dioxide absorber into a head of an amine regenerator column. Alternatively, the amine solution loaded with carbon dioxide is expanded in at least one, preferably more than one, flash regeneration columns or flash regeneration vessels at different pressure levels, for example a high pressure (HP) and a low pressure (LP) flash column. Before expanding the loaded amine solution into the (flash) regeneration columns or (flash) regeneration vessels, heat exchange takes place against hot regenerated solution from the bottom of the amine regenerator in an amine heat exchanger. In the amine regenerator, the solution is almost completely freed from the absorbed carbon dioxide by stripping steam generated in an amine reboiler. The hot overhead vapors from the amine regenerator are fed into an air-cooled carbon dioxide condenser, in which the temperature of the carbon dioxide gas is reduced to such an extent that a large part of the stripping vapor condenses. The carbon dioxide is then discharged to the plant boundary under pressure control.

A small part of the condensate produced in the air-cooled carbon dioxide condenser is optionally discharged for wastewater treatment in a volume-controlled manner in order to control the water balance of the wash. The remaining condensate is fed to the backwash trays of the amine regenerator. The fully regenerated solution is drawn off in the bottom of the amine regenerator. After heat exchange in a further heat exchanger, the solution is pumped by means of the amine circulation pumps via an amine cooler to the head of the carbon dioxide absorber.

The carbon dioxide product routed out of the amine regenerator or LP Flash column or vessel usually has operating temperatures of 60 - 120 °C. The operating pressure of the amine regenerator or LP Flash is usually 0.1 - 1.2 barg. The carbon dioxide gas must be cooled to about 40 to 50 °C before delivery in order to condense water vapor and solvents. Gas-liquid separation then takes place. The condensed process water is returned to the steam reforming process by means of a reflux pump and carbon dioxide is extracted as a product stream. Air coolers or cooling water coolers are often used for cooling.

Beside environmental considerations, the separation of carbon dioxide from the synthesis gas is necessary under certain economic aspects, e.g., in a downstream cryogenic synthesis gas separation plant (coldbox). In the future, the separation of carbon dioxide from process streams as well as flue gas streams may play an important role for ecological and economic reasons (e.g., decarbonization, carbon dioxide tax). Such a separation is associated with additional investment costs for a carbon dioxide separation plant as well as with additional energetic efforts and costs.

Therefore, there is a need to address the aforementioned technical drawbacks in existing technologies in producing a carbon dioxide depleted synthesis gas product.

### SUMMARY

The present invention seeks to provide a plant and process for producing a carbon dioxide depleted synthesis gas product by steam reforming of a hydrocarbon-containing feed gas where the capital costs and/or costs of energy consumption are dominant in determining the overall economics. The present invention aims to provide a solution that overcomes, at least partially, the problems encountered in the prior art by integration of carbon dioxide capture with steam reforming. By integrating the carbon dioxide capture with steam reforming, the heat to be removed from the carbon dioxide separation can be used to preheat process streams in a reformer plant, thus increasing the overall efficiency of the process.

The object of the present invention is achieved by the solutions provided in the enclosed independent claims. Advantageous implementations of the present invention are further defined in the dependent claims.

According to a first aspect, the present invention provides a process for producing a carbon dioxide depleted synthesis gas product by steam reforming of a hydrocarbon-containing feed gas, comprising the following steps:
(a) providing a feed gas stream containing gaseous or vaporized hydrocarbons, preferably natural gas or naphtha;
(b) introducing the feed gas stream heated to a steam reforming inlet temperature into a main reforming stage, reacting the feed gas stream in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of a plurality of burners by burning at least one fuel gas with a preheated air stream as oxidant to form a flue gas stream, discharging said flue gas stream from said reformer furnace;
(c) discharging the crude synthesis gas stream from the main reforming stage and introducing the crude synthesis gas stream into a first cooling device, cooling the crude synthesis gas stream in the first cooling device in indirect heat exchange with a first coolant stream, discharging the cooled crude synthesis gas stream from the first cooling device;
(d) introducing the cooled crude synthesis gas stream and/or the flue gas stream, preferably the flue gas stream after at least one cooling step, into a carbon dioxide absorption column operating by means of a physical or chemical carbon dioxide absorption process, bringing the cooled crude synthesis gas stream in the carbon dioxide absorption column into contact with a liquid carbon dioxide selective absorbent stream fed to the carbon dioxide absorption column, discharging a carbon dioxide depleted syngas product stream as the overhead product of the carbon dioxide absorption column and discharging a carbon dioxide loaded absorbent stream as the bottom product of the carbon dioxide absorption column;
(e) introducing the carbon dioxide loaded absorbent stream into an absorbent regeneration column, contacting the carbon dioxide loaded absorbent stream in the absorbent regeneration column with a hot vapor or gas stripping stream, discharging a carbon dioxide enriched hot vapor stream or gas stream as the overhead product of the absorbent regeneration column and a carbon dioxide depleted hot absorbent stream as the bottoms product of the absorbent regeneration column;
(f) introducing the carbon dioxide enriched hot vapor stream or gas stream into a second cooling device, cooling the carbon dioxide enriched hot vapor stream or gas stream in the second cooling device in indirect heat exchange with a second coolant stream, discharging the carbon dioxide enriched cooled vapor stream or gas stream and a liquid condensate stream from the second cooling device;
(g) introducing the carbon dioxide enriched cooled vapor stream or gas stream and the liquid condensate stream into a phase separation device, discharging a gaseous carbon dioxide rich gas stream from the phase separation device, discharging the liquid condensate stream from the phase separation device, and at least partially recycling the liquid condensate stream to the absorbent regeneration column;
(h) introducing the carbon dioxide depleted hot absorbent stream into a third cooling device, cooling the carbon dioxide depleted hot absorbent stream in the third cooling device in indirect heat exchange with a third coolant stream, discharging the carbon dioxide depleted cooled absorbent stream from the third cooling device; at least partially recycling the carbon dioxide depleted cooled absorbent stream as a cooled carbon dioxide selective absorbent stream to the carbon dioxide absorption column;
(i) wherein at least one coolant stream selected from the group comprising:
   first coolant stream, second coolant stream, third coolant stream,
   is formed by at least one air stream which is preheated when passing through the cooler or coolers and is fed as a preheated air stream as oxidant to step (b).

The process for producing the carbon dioxide depleted synthesis gas product by steam reforming of the hydrocarbon-containing feed gas according to the present invention enables cost-effective production of carbon dioxide depleted synthesis gas product by integrating the carbon dioxide capture with steam reforming, where the heat to be removed from the carbon dioxide separation by solvent absorption in an absorption column, and/or during regeneration of the laden solvent, can be used to preheat process streams in the reformer plant, thus increasing the overall efficiency of the process. The combustion air or oxidant preheating upstream of a cold air preheater reduces the risk of corrosion on a flue gas side of the cold air preheater, thus enabling the use of more cost-effective materials. Further, the combustion air preheating increases the furnace efficiency of the reformers. The process eliminates low-pressure steam as well as a condensate system in the combustion air preheating. The process reduces cooling water requirements in carbon dioxide scrubbing, thereby enabling, (i) construction of a smaller cooling water system (cooling tower, pumps, piping), (ii) lower power consumption for cooling water pumps, cooling tower blowers, (iii) reduction of fresh water demand and wastewater volume of the cooling water system including reduction of necessary chemicals. The present invention may be of particular interest in a retrofit of a reformer system with a carbon dioxide scrubber since often the cooling water system is a limiting factor.

According to a second aspect, the present invention provides a plant for producing a carbon dioxide depleted synthesis gas product by steam reforming of a hydrocarbon-containing feed gas, comprising the following assemblies and components in fluid connection with each other:
(a) means for providing a feed gas stream containing gaseous or vaporized hydrocarbons, preferably natural gas or naphtha;
(b) a main reforming stage comprising a plurality of reformer tubes filled with a solid particulate reforming catalyst and arranged in a reformer furnace, the interior of which is heatable by means of a plurality of burners by burning at least one fuel gas with a preheated air stream as an oxidant to form a flue gas stream,
   means for introducing the feed gas stream heated to a steam reforming inlet temperature into the main reforming stage;
   means for discharging a crude synthesis gas stream from the main reforming stage,
   means for discharging the flue gas stream from said reformer furnace;
(c) a first cooling device suitable for cooling the crude synthesis gas stream in indirect heat exchange with a first coolant stream,
   means for introducing the crude synthesis gas stream into the first cooling device,
   means for discharging the cooled crude synthesis gas stream from the first cooling device;
(d) a carbon dioxide absorption column suitable for performing a physical or chemical carbon dioxide absorption process,
   means for introducing the cooled crude synthesis gas stream and/or the flue gas stream, preferably the flue gas stream after at least one cooling step, into the carbon dioxide absorption column,
   means for introducing a liquid, cooled, carbon dioxide selective absorbent stream into the carbon dioxide absorption column,
   means for discharging a carbon dioxide depleted syngas product stream as the overhead product of the carbon dioxide absorption column and means for discharging a carbon dioxide loaded absorbent stream as the bottom product of the carbon dioxide absorption column;
(e) an absorbent regeneration column,
   means for introducing the carbon dioxide loaded absorbent stream into the absorbent regeneration column,
   means for introducing a hot vapor or gas stripping stream into the absorbent regeneration column and/or means for generating a vapor or gas stripping stream in the absorbent regeneration column,
   means for discharging a carbon dioxide enriched hot vapor stream or gas stream as the overhead product of the absorbent regeneration column and means for discharging a carbon dioxide-depleted hot absorbent stream as the bottoms product of the absorbent regeneration column;
(f) a second cooling device suitable for cooling the carbon dioxide enriched hot steam stream or gas stream in indirect heat exchange with a second coolant stream,
   means for introducing the carbon dioxide enriched hot steam stream or gas stream into the second cooling device,
   means for discharging a carbon dioxide enriched cooled steam stream or gas stream and a condensate stream from the second cooling device,
(g) a phase separation device,
   means for introducing the carbon dioxide enriched cooled steam stream or gas stream and the condensate stream into the phase separation device,
   means for discharging a gaseous carbon dioxide rich gas stream from the phase separation device,
   means for discharging a liquid condensate stream from the phase separation device,
   means for at least partially recycling the liquid condensate stream to the absorbent regeneration column;
(h) a third cooling device suitable for cooling the carbon dioxide depleted hot absorbent stream in indirect heat exchange with a third coolant stream,
   means for introducing the carbon dioxide depleted hot absorbent stream into the third cooling device,
   means for discharging the carbon dioxide depleted cooled absorbent stream from the third cooling device,
   means for at least partially recycling the carbon dioxide depleted, cooled absorbent stream as a cooled, carbon dioxide selective absorbent stream to the carbon dioxide absorption column;
(i) means for introducing at least one air stream into at least one cooling device selected from the group comprising:
   first cooling device, second cooling device, third cooling device,
   means for discharging at least one preheated air stream from the at least one cooling device,
   means for supplying the at least one preheated air stream as oxidant to the main reforming stage.

The plant for producing the carbon dioxide depleted synthesis gas product by steam reforming of the hydrocarbon-containing feed gas according to the present invention enables cost-effective production of carbon dioxide depleted synthesis gas by integrating the carbon dioxide capture with steam reforming, where the heat to be removed from the carbon dioxide separation by solvent absorption in an absorption column, and/or during regeneration of the laden solvent, can be used to preheat process streams in the reformer plant, thus increasing the overall efficiency of the process. The combustion air or oxidant preheating upstream of the cold air preheater reduces the risk of corrosion on the flue gas side of the cold air preheater, thus enabling the use of more cost-effective materials. Further, the combustion air preheating increases the furnace efficiency of the reformers. The plant eliminates low-pressure steam as well as condensate system in the air preheating. The plant reduces cooling water requirements in carbon dioxide scrubbing, thereby enabling, (i) construction of a smaller cooling water system (cooling tower, pumps, piping), (ii) lower power consumption for cooling water pumps, cooling tower blowers, (iii) reduction of fresh water demand and wastewater volume of the cooling water system including reduction of necessary chemicals. The present invention may be of particular interest in a retrofit of the reformer system with a carbon dioxide scrubber since often the cooling water system is a limiting factor.

Embodiments of the present invention eliminate the aforementioned drawbacks in existing known approaches by integration of carbon dioxide capture with steam reforming. By integrating the carbon dioxide capture with steam reforming, the heat to be removed from the carbon dioxide separation can be used to preheat process streams in the reformer plant, thus increasing the overall efficiency of the process.

Additional aspects, advantages, features, and objects of the present invention are made apparent from the drawings and the detailed description of the illustrative embodiments construed in conjunction with the appended claims that follow. It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. To illustrate the present invention, exemplary constructions of the invention are shown in the drawings. However, the present invention is not limited to specific methods and instrumentalities disclosed herein. Moreover, those in the art will understand that the drawings are not to scale. Wherever possible, the same elements have been indicated by identical numbers. Embodiments of the present invention will now be described, by way of example only, with reference to the following diagrams wherein:

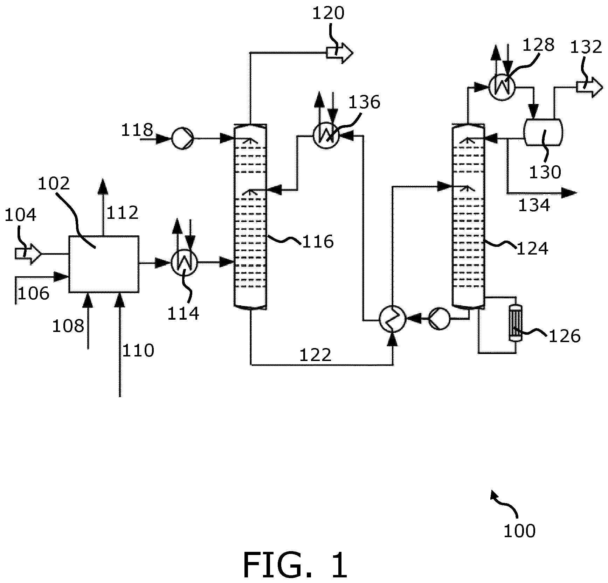

**FIG. 1** is a schematic illustration of a plant of prior art for the production of hydrogen;

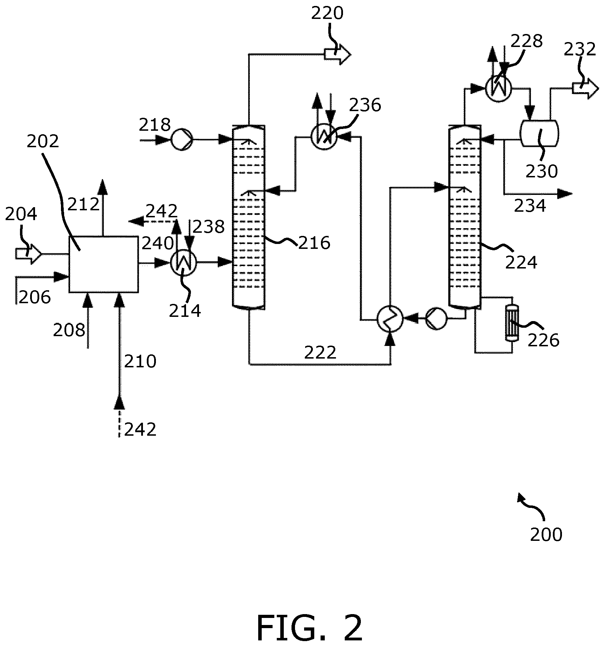

**FIG. 2** is a schematic illustration of a plant for producing a carbon dioxide depleted synthesis gas product by steam reforming of a hydrocarbon-containing feed gas by feeding a first preheated air stream as an oxidant for steam reforming from a first cooling device according to an embodiment of the present invention;

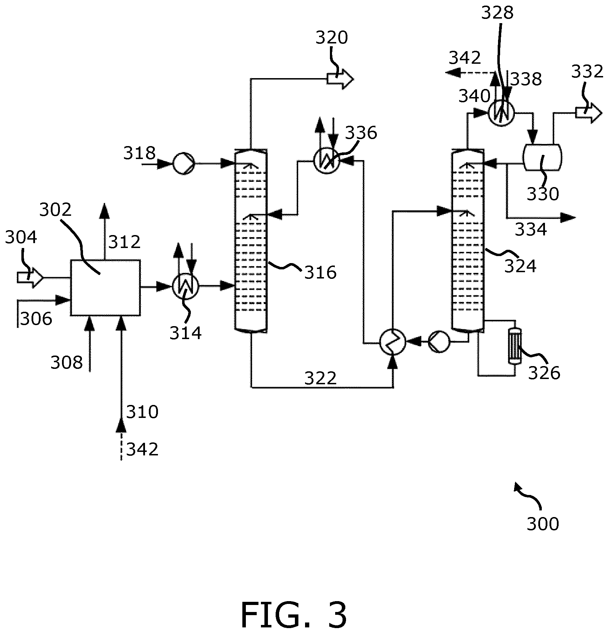

**FIG. 3** is a schematic illustration of a plant for producing a carbon dioxide depleted synthesis gas product by steam reforming of a hydrocarbon-containing feed gas by feeding a second preheated air stream as an oxidant for steam reforming from a second cooling device according to an embodiment of the present invention;

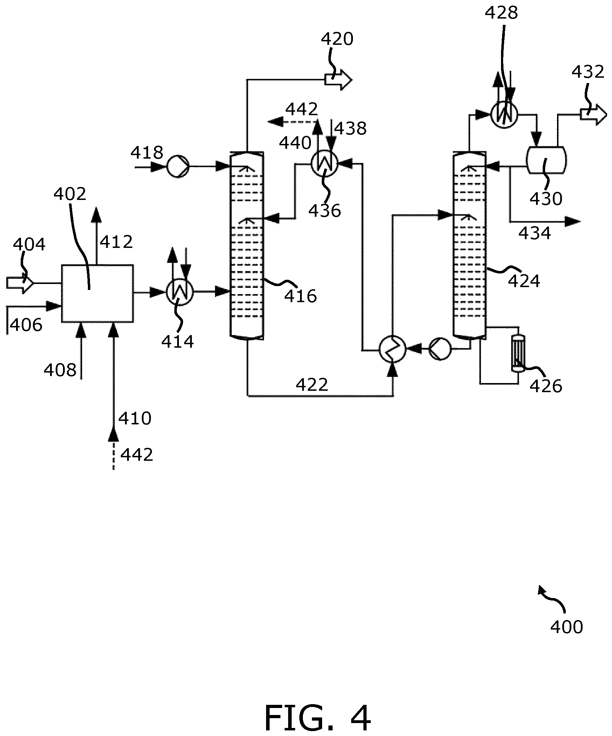

**FIG. 4** is a schematic illustration of a plant for producing a carbon dioxide depleted synthesis gas product by steam reforming of a hydrocarbon-containing feed gas by feeding a third preheated air stream as an oxidant for steam reforming from a third cooling device according to an embodiment of the present invention;

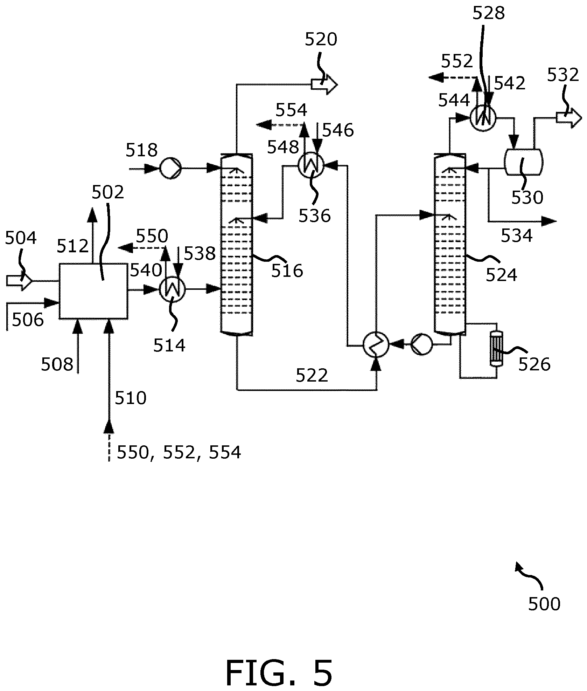

**FIG. 5** is a schematic illustration of a plant for producing a carbon dioxide depleted synthesis gas product by steam reforming of a hydrocarbon-containing feed gas by feeding a preheated air stream as an oxidant for steam reforming from any combination of two or three of a first cooling device, a second cooling device, a third cooling device according to an embodiment of the present invention.

### DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practicing the present invention are also possible.

Steam reforming conditions and carbon monoxide shift conversion (CO shift) conditions are known to those skilled in the art from the prior art. These are the physicochemical conditions under which a measurable, preferably industrially relevant, conversion of hydrocarbons to synthesis gas products is achieved. For example, in the context of steam reforming, important parameters include adjustment of a suitable steam reforming entry temperature of typically about 1000°C and addition of steam to the input gas containing hydrocarbons and thus adjustment of a steam/carbon ratio (S/C ratio). Typical values for the S/C ratio are between 1.5 and 3.5 mol/mol. Typical steam reforming inlet temperatures are up to 700 °C and typically range between 550 and 650 °C. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

Pressures, if any, are reported in absolute pressure units, bara for short, or in gauge pressure units, barg for short, unless otherwise stated in the particular individual context.

A fluid connection between two regions of the apparatus or plant according to the invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description, steam is to be understood as being synonymous with water vapor unless the opposite is indicated in an individual case. By contrast, the term "water" refers to water in the liquid state of matter unless otherwise stated in an individual case.

In the context of the present invention, a physical or chemical carbon dioxide separation process is understood to be a process that enables a fluid mixture, for example a gas mixture, to be separated into its components or undesirable components to be separated from this mixture by applying suitable physicochemical conditions, for example by phase transition such as condensation or by using a suitable sorbent. When a sorption process is used, it may be based on adsorption, i.e., binding of the substance or substances to be separated to a surface or interface of the solid adsorbent, or on absorption, i.e., uptake of the substance or substances to be separated into the volume of the liquid or solid adsorbent. The substance or substances separated and bound by means of sorption are referred to as adsorbate or absorbate. The binding forces acting in this process can be of a physical or chemical nature. Accordingly, weaker, non-specific binding forces, e.g., van der Waals forces, usually act in physical sorption, whereas stronger, more specific binding forces act in chemical sorption and the adsorbate and/or absorbent is chemically changed.

As synonyms for the term absorbent, the terms solvent or washing agent in the case of liquid absorbents are used in the context of the present invention.

A specific, physical absorption process is the gas scrubbing with cryogenic methanol, which uses methanol as absorbent or scrubbing agent, the temperature of which has been cooled by means of cold-generating processes below ambient temperature, preferably below 0 °C, most preferably below - 30 °C. This process is known to the skilled person as the Rectisol process.

In contrast, the amine washes, which are known per se and frequently used for the absorption of carbon dioxide, are based on chemical absorption (chemisorption) and achieve high purities even at relatively low pressures in the absorption column. The selectivity is also usually higher than with physical absorption processes.

In amine washing, slightly alkaline aqueous solutions of amines, often ethanolamine derivatives, are used in an absorption unit (absorption section) usually designed as a washing column. Absorption takes place at low temperature, e.g., 40 °C, and elevated pressure, e.g., up to 80 bara, in one example at 8 bara. Fresh or regenerated absorbent is fed at the top of the column and the gas stream to be separated is introduced in the lower section of the scrubbing column. In this process, carbon dioxide is reversibly chemically absorbed. The gas, which is depleted in carbon dioxide, leaves the column at the top and the loaded scrubbing agent is discharged at the bottom of the column and fed into a desorption section, which is also frequently designed as a separation column (absorbent regeneration column). In the desorption column (regeneration section), the reaction reverses the chemical equilibrium at a higher temperature and lower pressure, thus releasing the absorbed carbon dioxide as a gas. It can then be discharged at the head of the desorption column for further use or disposal. The absorbent regenerated in this way is returned to the absorption section.

For the purposes of the present invention, the term "absorbent regeneration column" is to be understood to also or exclusively comprise at least one flash column or flash vessel, preferably at least two flash columns or flash vessels operating at different pressures, in an example at high pressure (HP) and at low pressure (LP).

An absorbent commonly used in amine scrubbing is methyldiethanolamine (MDEA), which is mostly used in aqueous solutions. In addition, activators, for example piperazine, are often added to accelerate carbon dioxide absorption, as described, for example, in the article "The Activator Mechanism of Piperazine in Aqueous Methyldiethanolamine Solutions," J. Ying et al, Energy Procedia 114 (2017), pp. 2078 - 2087. These mixtures are then referred to as activated MDEA solutions (aMDEA).

According to a first aspect, the present invention provides a process for producing a carbon dioxide depleted synthesis gas product by steam reforming of a hydrocarbon-containing feed gas, comprising the following steps:
(a) providing a feed gas stream containing gaseous or vaporized hydrocarbons, preferably natural gas or naphtha;
(b) introducing the feed gas stream heated to a steam reforming inlet temperature into a main reforming stage, reacting the feed gas stream in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of a plurality of burners by burning at least one fuel gas with a preheated air stream as oxidant to form a flue gas stream, discharging said flue gas stream from said reformer furnace;
(c) discharging the crude synthesis gas stream from the main reforming stage and introducing the crude synthesis gas stream into a first cooling device, cooling the crude synthesis gas stream in the first cooling device in indirect heat exchange with a first coolant stream, discharging the cooled crude synthesis gas stream from the first cooling device;
(d) introducing the cooled crude synthesis gas stream and/or the flue gas stream, preferably the flue gas stream after at least one cooling step, into a carbon dioxide absorption column operating by means of a physical or chemical carbon dioxide absorption process, bringing the cooled crude synthesis gas stream in the carbon dioxide absorption column into contact with a liquid carbon dioxide selective absorbent stream fed to the carbon dioxide absorption column, discharging a carbon dioxide depleted syngas product stream as the overhead product of the carbon dioxide absorption column and discharging a carbon dioxide loaded absorbent stream as the bottom product of the carbon dioxide absorption column;
(e) introducing the carbon dioxide loaded absorbent stream into an absorbent regeneration column, contacting the carbon dioxide loaded absorbent stream in the absorbent regeneration column with a hot vapor or gas stripping stream, discharging a carbon dioxide enriched hot vapor stream or gas stream as the overhead product of the absorbent regeneration column and a carbon dioxide depleted hot absorbent stream as the bottoms product of the absorbent regeneration column;
(f) introducing the carbon dioxide enriched hot vapor stream or gas stream into a second cooling device, cooling the carbon dioxide enriched hot vapor stream or gas stream in the second cooling device in indirect heat exchange with a second coolant stream, discharging the carbon dioxide enriched cooled vapor stream or gas stream and a liquid condensate stream from the second cooling device;
(g) introducing the carbon dioxide enriched cooled vapor stream or gas stream and the liquid condensate stream into a phase separation device, discharging a gaseous carbon dioxide rich gas stream from the phase separation device, discharging the liquid condensate stream from the phase separation device, and at least partially recycling the liquid condensate stream to the absorbent regeneration column;
(h) introducing the carbon dioxide depleted hot absorbent stream into a third cooling device, cooling the carbon dioxide depleted hot absorbent stream in the third cooling device in indirect heat exchange with a third coolant stream, discharging the carbon dioxide depleted cooled absorbent stream from the third cooling device; at least partially recycling the carbon dioxide depleted cooled absorbent stream as a cooled carbon dioxide selective absorbent stream to the carbon dioxide absorption column;
(i) wherein at least one coolant stream selected from the group comprising:
   first coolant stream, second coolant stream, third coolant stream,
is formed by at least one air stream which is preheated when passing through the cooler or coolers and is fed as a preheated air stream as oxidant to step (b).

The advantage of the embodiments according to the present invention is that the embodiments enable cost-effective production of carbon dioxide depleted synthesis gas product by integrating the carbon dioxide capture with steam reforming, where the heat to be removed from the carbon dioxide separation can be used to preheat process streams in the reformer plant, thus increasing the overall efficiency of the process, especially the overall thermal or energetic efficiency of the process. The combustion air or oxidant preheating upstream of the cold air preheater reduces the risk of corrosion on the flue gas side of the cold air preheater, thus enabling the use of more cost-effective materials. Further, the combustion air preheating increases the furnace efficiency of the reformers. The process eliminates low-pressure steam as well as condensate system in the air preheating. The process reduces cooling water requirements in carbon dioxide scrubbing, thereby enabling, (i) construction of a smaller cooling water system (cooling tower, pumps, piping), (ii) lower power consumption for cooling water pumps, cooling tower blowers, (iii) reduction of fresh water demand and wastewater volume of the cooling water system including reduction of necessary chemicals. The present invention may be of particular interest in a retrofit of the reformer system with a carbon dioxide scrubber, since often the cooling water system is a limiting factor.

In an embodiment, the cold combustion air routed to the reformer furnace is used as a cooling medium for the hot solvent stream or the carbon dioxide loaded absorbent stream. In another embodiment, the cold combustion air routed to the reformer furnace is used as a cooling medium for the hot carbon dioxide stream or the carbon dioxide-depleted hot absorbent stream. In another embodiment, the cold combustion air routed to the reformer furnace is used as a cooling medium for the hot carbon dioxide stream or the carbon dioxide-depleted hot absorbent stream and simultaneously for the hot solvent stream or the carbon dioxide loaded absorbent stream.

Optionally, between step (d) and (e), the carbon dioxide loaded absorbent stream is heated in indirect heat exchange against the carbon dioxide depleted hot absorbent stream before being introduced into the absorbent regeneration column, the carbon dioxide-depleted hot absorbent stream being cooled and passed on to step (h). In this way, the thermal or energetic efficiency of the process is further improved.

Optionally, the at least one preheated air stream is further heated by indirect heat exchange, preferably multistage indirect heat exchange with the flue gas stream, before it is passed as oxidant to step (b). In this way, the thermal or energetic efficiency of the process is further improved.

Optionally, the contacting of the carbon dioxide loaded absorbent stream in the absorbent regeneration column in step (e) is carried out with a hot vaporous stripping agent stream generated as inherent vapor in the bottom of the absorbent regeneration column by means of a reboiler. In this way, the thermal or energetic efficiency of the process is further improved. Additionally, the absorbent regeneration can be performed quicker and a lower residual concentration of carbon dioxide in the solvent stream is achieved.

Optionally, between step (c) and (d) the cooled crude synthesis gas stream is introduced into a carbon monoxide shift conversion stage and is converted with a stream of steam under carbon monoxide shift conversion conditions into a shift converted synthesis gas stream enriched in hydrogen and carbon dioxide and depleted in carbon monoxide, wherein the shift converted synthesis gas stream is introduced into a fourth cooling device and is cooled therein in indirect heat exchange with a fourth coolant stream, wherein the cooled converted synthesis gas stream is discharged from the fourth cooling device and is introduced into the carbon dioxide absorption column instead of the cooled crude synthesis gas stream in step (d). The carbon monoxide shift conversion serves to increase the yield of hydrogen, if desired. Since this reaction is exothermic, cooling of the converted synthesis gas stream facilitates absorption of carbon dioxide in the downstream carbon dioxide absorption column.

Optionally, the fourth coolant stream is formed by at least one air stream which is preheated in the process and is fed as a preheated air stream as oxidant to step (b). In this way, the thermal or energetic efficiency of the process is further improved.

Optionally, between steps (a) and (b), the hydrocarbon containing feed gas is first introduced into a pre-reformer, in which the hydrocarbon containing feed gas is converted under pre-reforming conditions to a pre-reformed hydrocarbon containing feed gas, and the pre-reformed hydrocarbon-containing feed gas is then fed to step (b). By pre-reforming the hydrocarbon containing feed gas, its content of hydrocarbons with more than one C atom per molecule is reduced by at least partial conversion to methane.

Optionally, the feed gas containing hydrocarbons is subjected to a desulfurization step, preferably a hydrodesulfurization step (HDS), prior to reaction in the pre-reforming stage and/or in the main reforming stage.

Optionally, an absorbent is used according to the following alternatives:
(a) a chemical absorbent, preferably an amine containing chemical absorbent, most preferably a methyldiethanolamine (MDEA) containing chemical absorbent; or
(b) a physical absorbent, preferably methanol, most preferably methanol that has been cooled below ambient temperature.

Chemical absorbents allow removal of carbon dioxide from large gas flows at low pressures, especially pressures near ambient pressure. On the other hand, physical absorbent like methanol cooled below ambient temperature show excellent selectivities for carbon dioxide, and often need less energy for being regenerated as compared to chemical absorbents.

According to a second aspect, the present invention provides a plant for producing a carbon dioxide depleted synthesis gas product by steam reforming of a hydrocarbon-containing feed gas, comprising the following assemblies and components in fluid connection with each other:
(a) means for providing a feed gas stream containing gaseous or vaporized hydrocarbons, preferably natural gas or naphtha;
(b) a main reforming stage comprising a plurality of reformer tubes filled with a solid particulate reforming catalyst and arranged in a reformer furnace, the interior of which is heatable by means of a plurality of burners by burning at least one fuel gas with a preheated air stream as an oxidant to form a flue gas stream,
   means for introducing the feed gas stream heated to a steam reforming inlet temperature into the main reforming stage;
   means for discharging a crude synthesis gas stream from the main reforming stage,
   means for discharging the flue gas stream from said reformer furnace;
(c) a first cooling device suitable for cooling the crude synthesis gas stream in indirect heat exchange with a first coolant stream,
   means for introducing the crude synthesis gas stream into the first cooling device,
   means for discharging the cooled crude synthesis gas stream from the first cooling device;
(d) a carbon dioxide absorption column suitable for performing a physical or chemical carbon dioxide absorption process,
   means for introducing the cooled crude synthesis gas stream and/or the flue gas stream, preferably the flue gas stream after at least one cooling step, into the carbon dioxide absorption column,
   means for introducing a liquid, cooled, carbon dioxide selective absorbent stream into the carbon dioxide absorption column,
   means for discharging a carbon dioxide depleted syngas product stream as the overhead product of the carbon dioxide absorption column and means for discharging a carbon dioxide loaded absorbent stream as the bottom product of the carbon dioxide absorption column;
(e) an absorbent regeneration column,
   means for introducing the carbon dioxide loaded absorbent stream into the absorbent regeneration column,
   means for introducing a hot vapor or gas stripping stream into the absorbent regeneration column and/or means for generating a vapor or gas stripping stream in the absorbent regeneration column,
   means for discharging a carbon dioxide enriched hot vapor stream or gas stream as the overhead product of the absorbent regeneration column and means for discharging a carbon dioxide-depleted hot absorbent stream as the bottoms product of the absorbent regeneration column;
(f) a second cooling device suitable for cooling the carbon dioxide enriched hot steam stream or gas stream in indirect heat exchange with a second coolant stream,
   means for introducing the carbon dioxide enriched hot steam stream or gas stream into the second cooling device,
   means for discharging a carbon dioxide enriched cooled steam stream or gas stream and a condensate stream from the second cooling device,
(g) a phase separation device,
   means for introducing the carbon dioxide enriched cooled steam stream or gas stream and the condensate stream into the phase separation device,
   means for discharging a gaseous carbon dioxide rich gas stream from the phase separation device,
   means for discharging a liquid condensate stream from the phase separation device,
   means for at least partially recycling the liquid condensate stream to the absorbent regeneration column;
(h) a third cooling device suitable for cooling the carbon dioxide depleted hot absorbent stream in indirect heat exchange with a third coolant stream,
   means for introducing the carbon dioxide depleted hot absorbent stream into the third cooling device,
   means for discharging the carbon dioxide depleted cooled absorbent stream from the third cooling device,
   means for at least partially recycling the carbon dioxide depleted, cooled absorbent stream as a cooled, carbon dioxide selective absorbent stream to the carbon dioxide absorption column;
(i) means for introducing at least one air stream into at least one cooling device selected from the group comprising:
   first cooling device, second cooling device, third cooling device,
   means for discharging at least one preheated air stream from the at least one cooling device,
   means for supplying the at least one preheated air stream as oxidant to the main reforming stage.

Optionally, the plant further comprising means for allowing the carbon dioxide loaded absorbent stream to be heated in indirect heat exchange against the carbon dioxide depleted hot absorbent stream prior to its introduction into the absorbent regeneration column, wherein the carbon dioxide depleted hot absorbent stream is cooled and fed to the third cooling device.

Optionally, the plant further comprising means allowing the at least one preheated air stream to be further heated by indirect heat exchange, preferably multistage indirect heat exchange with the flue gas stream before being fed as oxidant to the main reforming stage.

Optionally, the absorbent regeneration column comprises a reboiler for generating a vapor stream or gas stream in the bottom of the column as a stripping agent stream.

Optionally, the plant further comprising a carbon monoxide shift conversion stage arranged downstream of the main reforming stage and upstream of the carbon dioxide absorption column.

Optionally, the plant further comprising a fourth cooling device arranged downstream of the carbon monoxide shift conversion stage and upstream of the carbon dioxide absorption column, adapted to supply at least one air stream as a fourth cooling stream to the fourth cooling device.

Embodiments of the present invention substantially eliminate or at least partially address the aforementioned technical drawbacks in existing technologies in providing a plant and process for producing a carbon dioxide depleted synthesis gas product by integrating the carbon dioxide capture with steam reforming where the capital costs are dominant in determining the overall economics.

### DETAILED DESCRIPTION OF THE DRAWINGS

**FIG. 1** is a schematic illustration of a plant **100** of prior art for the production of hydrogen. The plant **100** includes a reformer furnace **102,** a feed gas stream providing means **104,** a steam introducing means **106,** a fuel gas introducing means **108,** a preheated air stream introducing means **110,** a crude synthesis gas stream discharging means, a flue gas stream discharging means **112,** a first cooling device **114,** a crude synthesis gas stream introducing means, a cooled crude synthesis gas stream discharging means, a carbon dioxide absorption column **116,** a cooled crude synthesis gas stream and/or the flue gas stream introducing means, a liquid, cooled, carbon dioxide selective absorbent stream introducing means **118,** a carbon dioxide depleted synthesis gas product stream discharging means **120,** a carbon dioxide loaded absorbent stream discharging means **122,** an absorbent regeneration column **124,** a carbon dioxide loaded absorbent stream introducing means, a hot vapor or gas stripping stream introducing means, a vapor or gas stripping stream generating means **126,** a carbon dioxide enriched hot vapor stream or gas stream discharging means, a carbon dioxide-depleted hot absorbent stream discharging means, a second cooling device **128,** a carbon dioxide enriched hot vapor stream or gas stream introducing means, a carbon dioxide enriched cooled vapor stream or gas stream and a condensate stream discharging means, a phase separation device **130,** a carbon dioxide enriched cooled steam stream or gas stream and the condensate stream introducing means, a gaseous carbon dioxide rich gas stream discharging means **132,** a liquid condensate stream discharging means **134,** a liquid condensate stream recycling means, a third cooling device **136,** a carbon dioxide depleted hot absorbent stream introducing means, a carbon dioxide depleted cooled absorbent stream discharging means, a carbon dioxide depleted, and a cooled absorbent stream recycling means. The carbon dioxide depleted synthesis gas product is produced by introducing a feed gas stream containing gaseous or vaporized hydrocarbons, preferably natural gas or naphtha feed gas stream heated to a steam reforming inlet temperature from the feed gas stream providing means **104** into a main reforming stage. The feed gas stream is reacted in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons. The reformer tubes are arranged in the reformer furnace **102** and the interior of the reformer furnace **102** is heated by means of a plurality of burners by burning at least one fuel gas with a preheated air stream as oxidant to form a flue gas stream. Steam is introduced into the reformer furnace **102** through the steam introducing means **106,** the at least one fuel gas is introduced into the reformer furnace **102** through the fuel gas introducing means **108** and the preheated air stream is introduced into the reformer furnace **102** through the preheated air stream introducing means **110.** The flue gas stream is discharged from the reformer furnace **102** through the flue gas stream discharging means **112.** The crude synthesis gas stream is discharged from the reformer furnace **102** through the crude synthesis gas stream discharging means and introduced into the first cooling device **114** through the crude synthesis gas stream introducing means. The crude synthesis gas stream is cooled in the first cooling device **114** in indirect heat exchange with a first coolant stream, e. g. cooling water, and discharged from the first cooling device **114** through the cooled crude synthesis gas stream discharging means. The cooled crude synthesis gas stream and/or the flue gas stream, preferably the flue gas stream after at least one cooling step is introduced through the cooled crude synthesis gas stream and/or the flue gas stream introducing means into the carbon dioxide absorption column **116.** The carbon dioxide absorption column **116** operates by means of a physical or chemical carbon dioxide absorption process to bring the cooled crude synthesis gas stream in the carbon dioxide absorption column **116** into contact with a liquid carbon dioxide selective absorbent stream which is fed to the carbon dioxide absorption column **116** through the liquid, cooled, carbon dioxide selective absorbent stream introducing means **118.** Carbon dioxide depleted synthesis gas product stream is discharged as the overhead product of the carbon dioxide absorption column **116** through the carbon dioxide depleted synthesis gas product stream discharging means **120** and carbon dioxide loaded absorbent stream is discharged as the bottom product of the carbon dioxide absorption column **116** through the carbon dioxide loaded absorbent stream discharging means **122.** The carbon dioxide loaded absorbent stream is introduced through the carbon dioxide loaded absorbent stream introducing means into the absorbent regeneration column **124** and a hot vapor or gas stripping stream is introduced into the absorbent regeneration column **124** through the hot vapor or gas stripping stream introducing means. The carbon dioxide loaded absorbent stream is contacted with the hot vapor or gas stripping stream in the absorbent regeneration column **124.** The hot vapor or gas stripping stream is generated by the vapor or gas stripping stream generating means **126.** Carbon dioxide enriched hot vapor stream or gas stream is discharged through the carbon dioxide enriched hot vapor stream or gas stream discharging means as the overhead product of the absorbent regeneration column **124** and carbon dioxide depleted hot absorbent stream is discharged through the carbon dioxide-depleted hot absorbent stream discharging means as the bottoms product of the absorbent regeneration column **124.** The carbon dioxide enriched hot vapor stream or gas stream is introduced through the carbon dioxide enriched hot vapor stream or gas stream introducing means into the second cooling device **128** and cooled in indirect heat exchange with a second coolant stream e. g. cooling water. Carbon dioxide enriched cooled vapor stream or gas stream and liquid condensate stream are discharged through the carbon dioxide enriched cooled vapor stream or gas stream and condensate stream discharging means from the second cooling device **128.** The second cooling device **128** is used for overhead condensation of the absorbent regeneration column **124.** The carbon dioxide enriched cooled vapor stream or gas stream and the liquid condensate stream are introduced into the phase separation device **130** and a gaseous carbon dioxide rich gas stream is discharged through the gaseous carbon dioxide rich gas stream discharging means **132** and liquid condensate stream is discharged through the liquid condensate stream means **134** from the phase separation device **130.** The liquid condensate stream is at least partially recycled to the absorbent regeneration column **124** through the liquid condensate stream recycling means for at least partially recycling the liquid condensate stream into the absorbent regeneration column **124.** The carbon dioxide depleted hot absorbent stream is introduced through the carbon dioxide depleted hot absorbent stream introducing means into the third cooling device **136** and the carbon dioxide depleted hot absorbent stream is cooled in indirect heat exchange with a third coolant stream e. g. cooling water. Carbon dioxide depleted cooled absorbent stream is discharged by the carbon dioxide depleted cooled absorbent stream discharging means from the third cooling device **136.** The third cooling device **136** is used for carbon dioxide depleted hot absorbent stream cooling prior to routing it back into the carbon dioxide absorption column **116.** The carbon dioxide depleted cooled absorbent stream is at least partially recycled through the carbon dioxide depleted, cooled absorbent stream recycling means as a cooled, carbon dioxide selective absorbent stream to the carbon dioxide absorption column **116.**

**FIG. 2** is a schematic illustration of a plant **200** for producing a carbon dioxide depleted synthesis gas product by steam reforming of a hydrocarbon-containing feed gas by feeding a first preheated air stream as an oxidant for steam reforming from a first cooling device **214** according to an embodiment of the present invention. The plant **200** includes a reformer furnace **202,** a feed gas stream providing means **204,** a steam introducing means **206,** a fuel gas introducing means **208,** a preheated air stream introducing means **210,** a crude synthesis gas stream discharging means, a flue gas stream discharging means **212,** a first cooling device **214,** a crude synthesis gas stream introducing means, a cooled crude synthesis gas stream discharging means, a carbon dioxide absorption column **216,** a cooled crude synthesis gas stream and/or the flue gas stream introducing means, a liquid, cooled, carbon dioxide selective absorbent stream introducing means **218,** a carbon dioxide depleted synthesis gas product stream discharging means **220,** a carbon dioxide loaded absorbent stream discharging means **222,** an absorbent regeneration column **224,** a carbon dioxide loaded absorbent stream introducing means, a hot vapor or gas stripping stream introducing means, a vapor or gas stripping stream generating means **226,** a carbon dioxide enriched hot vapor stream or gas stream discharging means, a carbon dioxide-depleted hot absorbent stream discharging means, a second cooling device **228,** a carbon dioxide enriched hot steam stream or gas stream introducing means, a carbon dioxide enriched cooled steam stream or gas stream and a condensate stream discharging means, a phase separation device **230,** a carbon dioxide enriched cooled steam stream or gas stream and the condensate stream introducing means, a gaseous carbon dioxide rich gas stream discharging means **232,** a liquid condensate stream discharging means **234,** a liquid condensate stream recycling means, a third cooling device **236,** a carbon dioxide depleted hot absorbent stream introducing means, a carbon dioxide depleted cooled absorbent stream discharging means, a carbon dioxide depleted, cooled absorbent stream recycling means, a first air stream introducing means **238,** a first preheated air stream discharging means **240,** and a first preheated air stream supplying means **242.**

The carbon dioxide depleted synthesis gas product is produced by introducing a feed gas stream containing gaseous or vaporized hydrocarbons, preferably natural gas or naphtha feed gas stream heated to a steam reforming inlet temperature from the feed gas stream providing means **204** into a main reforming stage. The feed gas stream is reacted in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons. The reformer tubes are arranged in the reformer furnace **202** and the interior of the reformer furnace **202** is heated by means of a plurality of burners by burning at least one fuel gas with a preheated air stream as oxidant to form a flue gas stream. Steam is introduced into the reformer furnace **202** through the steam introducing means **206,** the at least one fuel gas is introduced into the reformer furnace **202** through the fuel gas introducing means **208** and the preheated air stream is introduced into the reformer furnace **202** through the preheated air stream introducing means **210.** The flue gas stream is discharged from the reformer furnace **202** through the flue gas stream discharging means **212.** The crude synthesis gas stream is discharged from the reformer furnace **202** through the crude synthesis gas stream discharging means and introduced into the first cooling device **214** through the crude synthesis gas stream introducing means. The crude synthesis gas stream is cooled in the first cooling device **214** in indirect heat exchange with a first coolant stream and discharged from the first cooling device **214** through the cooled crude synthesis gas stream discharging means. Cooled crude synthesis gas stream and/or the flue gas stream, preferably the flue gas stream after at least one cooling step is introduced through the cooled crude synthesis gas stream and/or the flue gas stream introducing means into the carbon dioxide absorption column **216.** The carbon dioxide absorption column **216** operates by means of a physical or chemical carbon dioxide absorption process to bring the cooled crude synthesis gas stream in the carbon dioxide absorption column **216** into contact with a liquid carbon dioxide selective absorbent stream fed to the carbon dioxide absorption column **216** through the liquid, cooled, carbon dioxide selective absorbent stream introducing means **218.** Carbon dioxide depleted synthesis gas product stream is discharged as the overhead product of the carbon dioxide absorption column **216** through the carbon dioxide depleted synthesis gas product stream discharging means **220** and a carbon dioxide loaded absorbent stream is discharged as the bottom product of the carbon dioxide absorption column **216** through the carbon dioxide loaded absorbent stream discharging means **222.** The carbon dioxide loaded absorbent stream is introduced through the carbon dioxide loaded absorbent stream introducing means into the absorbent regeneration column **224** and a hot vapor or gas stripping stream is introduced into the absorbent regeneration column **224** through the hot vapor or gas stripping stream introducing means. The carbon dioxide loaded absorbent stream is contacted with the hot vapor or gas stripping stream in the absorbent regeneration column **224.** The hot vapor or gas stripping stream is generated by the vapor or gas stripping stream generating means **226.** Carbon dioxide enriched hot vapor stream or gas stream is discharged through the carbon dioxide enriched hot vapor stream or gas stream discharging means as the overhead product of the absorbent regeneration column **224** and a carbon dioxide depleted hot absorbent stream is discharged through the carbon dioxide-depleted hot absorbent stream discharging means as the bottoms product of the absorbent regeneration column **224.** The carbon dioxide enriched hot vapor stream or gas stream is introduced through the carbon dioxide enriched hot vapor stream or gas stream introducing means into the second cooling device **228** and cooled in indirect heat exchange with a second coolant stream. Carbon dioxide enriched cooled vapor stream or gas stream and the liquid condensate stream are discharged through the carbon dioxide enriched cooled vapor stream or gas stream and condensate stream discharging means from the second cooling device **228.** The carbon dioxide enriched cooled vapor stream or gas stream and the liquid condensate stream are introduced into the phase separation device **230** and a gaseous carbon dioxide rich gas stream is discharged through the gaseous carbon dioxide rich gas stream discharging means **232** and a liquid condensate stream is discharged through the liquid condensate stream discharging means **234** from the phase separation device **230.** The liquid condensate stream is at least partially recycled to the absorbent regeneration column **224** through the liquid condensate stream recycling means. The carbon dioxide depleted hot absorbent stream is introduced through the carbon dioxide depleted hot absorbent stream introducing means into the third cooling device **236** and the carbon dioxide depleted hot absorbent stream is cooled in indirect heat exchange with a third coolant stream. Carbon dioxide depleted cooled absorbent stream is discharged through the carbon dioxide depleted cooled absorbent stream discharging means from the third cooling device **236.** The carbon dioxide depleted cooled absorbent stream is at least partially recycled through the carbon dioxide depleted, cooled absorbent stream recycling means as a cooled, carbon dioxide selective absorbent stream to the carbon dioxide absorption column **216.** A first air stream is introduced as the first coolant stream through the first air stream introducing means **238** into the first cooling device **214** and a first preheated air stream is discharged through the first preheated air stream discharging means **240** from the first cooling device **214.** The first preheated air stream is supplied through the first preheated air stream supplying means **242** as oxidant to the main reforming stage of the reformer furnace **202.**

**FIG. 3** is a schematic illustration of a plant **300** for producing a carbon dioxide depleted synthesis gas product by steam reforming of a hydrocarbon-containing feed gas by feeding a second preheated air stream as an oxidant for steam reforming from a second cooling device **328** according to an embodiment of the present invention. The plant **300** includes a reformer furnace **302,** a feed gas stream providing means **304,** a steam introducing means **306,** a fuel gas introducing means **308,** a preheated air stream introducing means **310,** a crude synthesis gas stream discharging means, a flue gas stream discharging means **312,** a first cooling device **314,** a crude synthesis gas stream introducing means, a cooled crude synthesis gas stream discharging means, a carbon dioxide absorption column **316,** a cooled crude synthesis gas stream and/or the flue gas stream introducing means, a liquid, cooled, carbon dioxide selective absorbent stream introducing means **318,** a carbon dioxide depleted synthesis gas product stream discharging means **320,** a carbon dioxide loaded absorbent stream discharging means **322,** an absorbent regeneration column **324,** a carbon dioxide loaded absorbent stream introducing means, a hot vapor or gas stripping stream introducing means, a vapor or gas stripping stream generating means **326,** a carbon dioxide enriched hot vapor stream or gas stream discharging means, a carbon dioxide-depleted hot absorbent stream discharging means, a second cooling device **328,** a carbon dioxide enriched hot steam stream or gas stream introducing means, a carbon dioxide enriched cooled steam stream or gas stream and a condensate stream discharging means, a phase separation device **330,** a carbon dioxide enriched cooled steam stream or gas stream and the condensate stream introducing means, a gaseous carbon dioxide rich gas stream discharging means **332,** a liquid condensate stream discharging means **334,** a liquid condensate stream recycling means, a third cooling device **336,** a means for introducing the carbon dioxide depleted hot absorbent stream into the third cooling device **336,** a carbon dioxide depleted hot absorbent stream introducing means, a carbon dioxide depleted cooled absorbent stream discharging means, a carbon dioxide depleted, cooled absorbent stream recycling means, a second air stream introducing means **338,** a second preheated air stream discharging means **340,** and a second preheated air stream supplying means **342.**

The carbon dioxide depleted synthesis gas product is produced introducing a feed gas stream containing gaseous or vaporized hydrocarbons, preferably natural gas or naphtha feed gas stream heated to a steam reforming inlet temperature from the feed gas stream providing means **304** into a main reforming stage. The feed gas stream is reacted in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons. The reformer tubes are arranged in the reformer furnace **302** and the interior of the reformer furnace **302** is heated by means of a plurality of burners by burning at least one fuel gas with a preheated air stream as oxidant to form a flue gas stream. Steam is introduced into the reformer furnace **302** through the steam introducing means **306,** the at least one fuel gas is introduced into the reformer furnace **302** through the fuel gas introducing means **308** and the preheated air stream is introduced into the reformer furnace **302** through the preheated air stream introducing means **310.** The flue gas stream is discharged from the reformer furnace **302** through the flue gas stream discharging means **312.** The crude synthesis gas stream is discharged from the reformer furnace **302** through the crude synthesis gas stream discharging means and introduced into the first cooling device **314** through the crude synthesis gas stream introducing means. The crude synthesis gas stream is cooled in the first cooling device **314** in indirect heat exchange with a first coolant stream and discharged from the first cooling device **314** through the cooled crude synthesis gas stream discharging means. Cooled crude synthesis gas stream and/or the flue gas stream, preferably the flue gas stream after at least one cooling step is introduced through the cooled crude synthesis gas stream and/or the flue gas stream introducing means into the carbon dioxide absorption column **316.** The carbon dioxide absorption column **316** operates by means of a physical or chemical carbon dioxide absorption process to bring the cooled crude synthesis gas stream in the carbon dioxide absorption column **316** into contact with a liquid carbon dioxide selective absorbent stream fed to the carbon dioxide absorption column **316** through the liquid, cooled, carbon dioxide selective absorbent stream introducing means **318.** Carbon dioxide depleted synthesis gas product stream is discharged as the overhead product of the carbon dioxide absorption column **316** through the carbon dioxide depleted synthesis gas product stream discharging means **320** and a carbon dioxide loaded absorbent stream is discharged as the bottom product of the carbon dioxide absorption column **316** through the carbon dioxide loaded absorbent stream discharging means **322.** The carbon dioxide loaded absorbent stream is introduced through the carbon dioxide loaded absorbent stream introducing means into the absorbent regeneration column **324** and a hot vapor or gas stripping stream is introduced into the absorbent regeneration column **324** through the hot vapor or gas stripping stream introducing means. The carbon dioxide loaded absorbent stream is contacted with the hot vapor or gas stripping stream in the absorbent regeneration column **324.** The hot vapor or gas stripping stream is generated by the vapor or gas stripping stream generating means **326.** Carbon dioxide enriched hot vapor stream or gas stream is discharged through the carbon dioxide-depleted hot absorbent stream discharging means as the overhead product of the absorbent regeneration column **324** and a carbon dioxide depleted hot absorbent stream is discharged through the carbon dioxide-depleted hot absorbent stream discharging means as the bottoms product of the absorbent regeneration column **324.** The carbon dioxide enriched hot vapor stream or gas stream is introduced through the carbon dioxide enriched hot vapor stream or gas stream introducing means into the second cooling device **328** and cooled in indirect heat exchange with a second coolant stream. Carbon dioxide enriched cooled vapor stream or gas stream and a liquid condensate stream are discharged through the carbon dioxide enriched cooled vapor stream or gas stream and condensate stream discharging means from the second cooling device **328.** The carbon dioxide enriched cooled vapor stream or gas stream and the liquid condensate stream are introduced into the phase separation device **330** and a gaseous carbon dioxide rich gas stream is discharged through the gaseous carbon dioxide rich gas stream discharging means **332** and a liquid condensate stream is discharged through the liquid condensate stream discharging means **334** from the phase separation device **330.** The liquid condensate stream is at least partially recycled to the absorbent regeneration column **324** through the liquid condensate stream recycling means. The carbon dioxide depleted hot absorbent stream is introduced through the carbon dioxide depleted hot absorbent stream introducing means into the third cooling device **336** and the carbon dioxide depleted hot absorbent stream is cooled in indirect heat exchange with a third coolant stream. Carbon dioxide depleted cooled absorbent stream is discharged through the carbon dioxide depleted cooled absorbent stream discharging means from the third cooling device **336.** The carbon dioxide depleted cooled absorbent stream is at least partially recycled through the carbon dioxide depleted, cooled absorbent stream recycling means as a cooled, carbon dioxide selective absorbent stream to the carbon dioxide absorption column **316.** A second air stream is introduced as the second coolant stream through the second air stream introducing means **338** into the second cooling device **328** and a second preheated air stream is discharged through the second preheated air stream discharging means **340** from the second cooling device **328.** The second preheated air stream is supplied through the second preheated air stream supplying means **342** as oxidant to the main reforming stage of the reformer furnace **302.**

**FIG. 4** is a schematic illustration of a plant **400** for producing a carbon dioxide depleted synthesis gas product by steam reforming of a hydrocarbon-containing feed gas by feeding a third air stream as an oxidant for steam reforming from a third cooling device **436** according to an embodiment of the present invention. The steam reforming plant **400** includes a reformer furnace **402,** a feed gas stream providing means **404,** a steam introducing means **406,** a fuel gas introducing means **408,** a preheated air stream introducing means **410,** a crude synthesis gas stream discharging means, a flue gas stream discharging means **412,** a first cooling device **414,** a crude synthesis gas stream introducing means, a cooled crude synthesis gas stream discharging means, a carbon dioxide absorption column **416,** a cooled crude synthesis gas stream and/or the flue gas stream introducing means, a liquid, cooled, carbon dioxide selective absorbent stream introducing means **418,** a carbon dioxide depleted synthesis gas product stream discharging means **420,** a carbon dioxide loaded absorbent stream discharging means **422,** an absorbent regeneration column **424,** a carbon dioxide loaded absorbent stream introducing means, a hot vapor or gas stripping stream introducing means, a vapor or gas stripping stream generating means **426,** a carbon dioxide enriched hot vapor stream or gas stream discharging means, a carbon dioxide-depleted hot absorbent stream discharging means, a second cooling device **428,** a carbon dioxide enriched hot steam stream or gas stream introducing means, a carbon dioxide enriched cooled steam stream or gas stream and a condensate stream discharging means, a phase separation device **430,** a carbon dioxide enriched cooled steam stream or gas stream and the condensate stream introducing means, a gaseous carbon dioxide rich gas stream discharging means **432,** a liquid condensate stream discharging means **434,** a liquid condensate stream recycling means, the third cooling device **436,** a carbon dioxide depleted hot absorbent stream introducing means, a carbon dioxide depleted cooled absorbent stream discharging means, a carbon dioxide depleted, cooled absorbent stream recycling means, a third air stream introducing means **438,** a third preheated air stream discharging means **440,** and a third preheated air stream supplying means **442.**

The carbon dioxide depleted synthesis gas product is produced by introducing a feed gas stream containing gaseous or vaporized hydrocarbons, preferably natural gas or naphtha feed gas stream heated to a steam reforming inlet temperature from the feed gas steam providing means **404** into a main reforming stage. The feed gas stream is reacted in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons. The reformer tubes are arranged in the reformer furnace 402 and the interior of the reformer furnace **402** is heated by means of a plurality of burners by burning at least one fuel gas with a preheated air stream as oxidant to form a flue gas stream. Steam is introduced into the reformer furnace **402** through the steam introducing means **406,** the at least one fuel gas is introduced into the reformer furnace **402** through the fuel gas introducing means **408** and the preheated air stream is introduced into the reformer furnace **402** through the preheated air stream introducing means **410.** The flue gas stream is discharged from the reformer furnace **402** through the flue gas stream discharging means **412.** The crude synthesis gas stream is discharged from the reformer furnace **402** through the crude synthesis gas stream discharging means and introduced into the first cooling device **414** through the crude synthesis gas stream introducing means. The crude synthesis gas stream is cooled in the first cooling device **414** in indirect heat exchange with a first coolant stream and discharged from the first cooling device **414** through the cooled crude synthesis gas stream discharging means. Cooled crude synthesis gas stream and/or the flue gas stream, preferably the flue gas stream after at least one cooling step is introduced through the cooled crude synthesis gas stream and/or the flue gas stream introducing means into the carbon dioxide absorption column **416.** The carbon dioxide absorption column **416** operates by means of a physical or chemical carbon dioxide absorption process to bring the cooled crude synthesis gas stream in the carbon dioxide absorption column **416** into contact with a liquid carbon dioxide selective absorbent stream fed to the carbon dioxide absorption column **416** through the liquid, cooled, carbon dioxide selective absorbent stream introducing means **418.** Carbon dioxide depleted synthesis gas product stream is discharged as the overhead product of the carbon dioxide absorption column **416** through the carbon dioxide depleted synthesis gas product stream discharging means **420** and a carbon dioxide loaded absorbent stream is discharged as the bottom product of the carbon dioxide absorption column **416** through the carbon dioxide loaded absorbent stream discharging means **422.** The carbon dioxide loaded absorbent stream is introduced through the carbon dioxide loaded absorbent stream introducing means into the absorbent regeneration column **424** and a hot vapor or gas stripping stream is introduced into the absorbent regeneration column **424** through the hot vapor or gas stripping stream introducing means. The carbon dioxide loaded absorbent stream is contacted with the hot vapor or gas stripping stream in the absorbent regeneration column **424.** The hot vapor or gas stripping stream is generated by the vapor or gas stripping stream generating means **426.** Carbon dioxide enriched hot vapor stream or gas stream is discharged through the carbon dioxide-depleted hot absorbent stream discharging means as the overhead product of the absorbent regeneration column **424** and a carbon dioxide depleted hot absorbent stream is discharged through the carbon dioxide-depleted hot absorbent stream discharging means as the bottoms product of the absorbent regeneration column **424.** The carbon dioxide enriched hot vapor stream or gas stream is introduced through the carbon dioxide enriched hot vapor stream or gas stream introducing means into the second cooling device **428** and cooled in indirect heat exchange with a second coolant stream. Carbon dioxide enriched cooled vapor stream or gas stream and a liquid condensate stream are discharged through the carbon dioxide enriched cooled vapor stream or gas stream and condensate stream discharging means from the second cooling device **428.** The carbon dioxide enriched cooled vapor stream or gas stream and the liquid condensate stream are introduced into the phase separation device **430** and a gaseous carbon dioxide rich gas stream is discharged through the gaseous carbon dioxide rich gas stream discharging means **432** and a liquid condensate stream is discharged through the liquid condensate stream discharging means **434** from the phase separation device **430.** The liquid condensate stream is at least partially recycled to the absorbent regeneration column **424** through the liquid condensate stream recycling means. The carbon dioxide depleted hot absorbent stream is introduced through the carbon dioxide depleted hot absorbent stream introducing means into the third cooling device **436** and the carbon dioxide depleted hot absorbent stream is cooled in indirect heat exchange with a third coolant stream. Carbon dioxide depleted cooled absorbent stream is discharged through the carbon dioxide depleted cooled absorbent stream discharging means from the third cooling device **436.** The carbon dioxide depleted cooled absorbent stream is at least partially recycled through the carbon dioxide depleted, cooled absorbent stream recycling means as a cooled, carbon dioxide selective absorbent stream to the carbon dioxide absorption column **416.** A third air stream is introduced as the third coolant stream through the third air stream introducing means **438** into the third cooling device **436** and a third preheated air stream is discharged through the third preheated air stream discharging means **440** from the third cooling device **436.** The third preheated air stream is supplied through the third preheated air stream supplying means **442** as oxidant to the main reforming stage of the reformer furnace **402.**

**FIG. 5** is a schematic illustration of a plant **500** for producing a carbon dioxide depleted synthesis gas product by steam reforming of a hydrocarbon-containing feed gas by feeding a preheated air stream as an oxidant for steam reforming from any combination of two or three of a first cooling device **514,** a second cooling device **528,** a third cooling device **536_according** to an embodiment of the present invention. The plant **500** includes a reformer furnace **502,** a feed gas stream providing means **504,** a steam introducing means **506,** a fuel gas introducing means **508,** a preheated air stream introducing means **510,** a crude synthesis gas stream discharging means, a flue gas stream discharging means **512,** a first cooling device **514,** a crude synthesis gas stream introducing means, a cooled crude synthesis gas stream discharging means, a carbon dioxide absorption column **516,** a cooled crude synthesis gas stream and/or the flue gas stream introducing means, a liquid, cooled, carbon dioxide selective absorbent stream introducing means **518,** a carbon dioxide depleted synthesis gas product stream discharging means **520,** a carbon dioxide loaded absorbent stream discharging means **522,** an absorbent regeneration column **524,** a carbon dioxide loaded absorbent stream introducing means, a hot vapor or gas stripping stream introducing means, a vapor or gas stripping stream generating means **526,** a carbon dioxide enriched hot vapor stream or gas stream discharging means, a carbon dioxide-depleted hot absorbent stream discharging means, a second cooling device **528,** a carbon dioxide enriched hot steam stream or gas stream introducing means, a carbon dioxide enriched cooled steam stream or gas stream and a condensate stream discharging means, a phase separation device **530,** a carbon dioxide enriched cooled steam stream or gas stream and the condensate stream introducing means, a gaseous carbon dioxide rich gas stream discharging means **532,** a liquid condensate stream discharging means **534,** a liquid condensate stream recycling means, a third cooling device **536,** a carbon dioxide depleted hot absorbent stream introducing means, a carbon dioxide depleted cooled absorbent stream discharging means, a carbon dioxide depleted, cooled absorbent stream recycling means, a first air stream introducing means **538,** a first preheated air stream discharging means **540,** a second air stream introducing means **542,** a second preheated air stream discharging means **544,** a third air stream introducing means **546,** a third air stream discharging means **548,** a first preheated air stream supplying means **550,** a second preheated air stream supplying means **552,** and a third preheated air stream supplying means **554.**

The carbon dioxide depleted synthesis gas product is produced by introducing a feed gas stream containing gaseous or vaporized hydrocarbons, preferably natural gas or naphtha feed gas stream heated to a steam reforming inlet temperature from the feed gas stream providing means **504** into a main reforming stage. The feed gas stream is reacted in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons. The reformer tubes are arranged in the reformer furnace **502** and the interior of the reformer furnace **502** is heated by means of a plurality of burners by burning at least one fuel gas with a preheated air stream as oxidant to form a flue gas stream. The steam is introduced into the reformer furnace **502** through the steam introducing means **506,** the at least one fuel gas is introduced into the reformer furnace **502** through the fuel gas introducing means **508** and the preheated air stream is introduced into the reformer furnace **502** through the preheated air stream introducing means **510.** The flue gas stream is discharged from the reformer furnace **502** through the flue gas stream discharging means **512.** The crude synthesis gas stream is discharged from the reformer furnace **502** through the crude synthesis gas stream discharging means and introduced into the first cooling device **514** through the crude synthesis gas stream introducing means. The crude synthesis gas stream is cooled in the first cooling device **514** in indirect heat exchange with a first coolant stream and discharged from the first cooling device **514** through the cooled crude synthesis gas stream discharging means. Cooled crude synthesis gas stream and/or the flue gas stream, preferably the flue gas stream after at least one cooling step is introduced through the cooled crude synthesis gas stream and/or the flue gas stream introducing means into the carbon dioxide absorption column **516.** The carbon dioxide absorption column **516** operates by means of a physical or chemical carbon dioxide absorption process to bring the cooled crude synthesis gas stream in the carbon dioxide absorption column **516** into contact with a liquid carbon dioxide selective absorbent stream fed to the carbon dioxide absorption column **516** through the liquid, cooled, carbon dioxide selective absorbent stream introducing means **518.** Carbon dioxide depleted synthesis gas product stream is discharged as the overhead product of the carbon dioxide absorption column **516** through the carbon dioxide depleted synthesis gas product stream discharging means **520** and a carbon dioxide loaded absorbent stream is discharged as the bottom product of the carbon dioxide absorption column **516** through the carbon dioxide loaded absorbent stream discharging means **522.** The carbon dioxide loaded absorbent stream is introduced through the carbon dioxide loaded absorbent stream introducing means into the absorbent regeneration column **524** and a hot vapor or gas stripping stream is introduced into the absorbent regeneration column **524** through the hot vapor or gas stripping stream introducing means. The hot vapor or gas stripping stream is generated by the vapor or gas stripping stream generating means **526.** Carbon dioxide enriched hot vapor stream or gas stream is discharged through the carbon dioxide enriched hot vapor stream or gas stream discharging means as the overhead product of the absorbent regeneration column **524** and a carbon dioxide depleted hot absorbent stream is discharged through the carbon dioxide-depleted hot absorbent stream discharging means as the bottoms product of the absorbent regeneration column **524.** The carbon dioxide enriched hot vapor stream or gas stream is introduced through the carbon dioxide enriched hot vapor stream or gas stream introducing means into the second cooling device **528** and cooled in indirect heat exchange with a second coolant stream. Carbon dioxide enriched cooled vapor stream or gas stream and a liquid condensate stream are discharged through the carbon dioxide enriched cooled vapor stream or gas stream and condensate stream discharging means from the second cooling device **528.** The carbon dioxide enriched cooled vapor stream or gas stream and the liquid condensate stream are introduced into the phase separation device **530** and a gaseous carbon dioxide rich gas stream is discharged through the gaseous carbon dioxide rich gas stream discharging means **532** and a liquid condensate stream is discharged through the liquid condensate stream discharging means **534** from the phase separation device **530.** The liquid condensate stream is at least partially recycled to the absorbent regeneration column **524** through the liquid condensate stream recycling means. The carbon dioxide depleted hot absorbent stream is introduced through the carbon dioxide depleted hot absorbent stream introducing means into the third cooling device **536** and the carbon dioxide depleted hot absorbent stream is cooled in indirect heat exchange with a third coolant stream. Carbon dioxide depleted cooled absorbent stream is discharged through the carbon dioxide depleted cooled absorbent stream discharging means from the third cooling device **536.** The carbon dioxide depleted cooled absorbent stream is at least partially recycled through the carbon dioxide depleted, cooled absorbent stream recycling means as a cooled, carbon dioxide selective absorbent stream to the carbon dioxide absorption column **516.** A first air stream is introduced as the first coolant stream through the first air stream introducing means **538** into the first cooling device **514,** and the first preheated air stream is discharged through the first preheated air stream discharging means **540** from the first cooling device **514.** The second air stream is introduced as the second coolant stream through the second air stream introducing means **542** into the second cooling device **528** and the second preheated air stream is discharged through the second preheated air stream discharging means **544** from the second cooling device **528.** The third air stream is introduced as the third coolant stream through the third air stream introducing means **546** into the third cooling device **536** and the third preheated air stream is discharged through the third preheated air stream discharging means **548** from the third cooling device **536.** The first preheated air is introduced into the reformer furnace **502** through the first preheated air stream supplying means **550,** the second preheated air is introduced into the reformer furnace **502** through the second preheated air stream supplying means **552,** and the third preheated air is introduced into the reformer furnace **502** through the third preheated air stream supplying means **554.** The first preheated air, the second preheated air, the third preheated air from any combination of two or three of the first cooling device **514,** the second cooling device **528,** and the third cooling device **536** are fed as an oxidant to the main reforming stage of the reformer furnace **502.**

Further embodiments of plants according to the present invention may be equipped with one or more or all of the following assemblies and components, although this is not shown in Fig. 2 to 5:
- a carbon monoxide shift conversion stage arranged downstream of the main reforming stage and upstream of the carbon dioxide absorption column;
- a fourth cooling device arranged downstream of the carbon monoxide shift conversion stage and upstream of the carbon dioxide absorption column.

Modifications to embodiments of the present invention described in the foregoing are possible without departing from the scope of the present invention as defined by the accompanying claims. Expressions such as "including", "comprising", "incorporating", "have", "is" used to describe, and claim the present invention are intended to be construed in a non-exclusive manner, namely allowing for items, components or elements not explicitly described also to be present. Reference to the singular is also to be construed to relate to the plural.

### LIST OF REFERENCE NUMERALS

- 100, 200, 300, 400, 500: plant
- 102, 202, 302, 402, 502: reformer furnace
- 104, 204, 304, 404, 504: feed gas stream providing means
- 106, 206, 306, 406, 506: steam introducing means
- 108, 208, 308, 408, 508: fuel gas introducing means
- 110, 210, 310, 410, 510: preheated air stream introducing means
- 112, 212, 312, 412, 512: flue gas stream discharging means
- 114, 214, 314, 414, 514: first cooling device
- 116, 216, 316, 416, 516: carbon dioxide absorption column
- 118, 218, 318, 418, 518: liquid, cooled, carbon dioxide selective absorbent stream introducing means
- 120, 220, 320, 420, 520: carbon dioxide depleted synthesis gas or syngas product stream discharging means
- 122, 222, 322, 422, 522: carbon dioxide loaded absorbent stream discharging means
- 124, 224, 324, 424, 524: absorbent regeneration column
- 126, 226, 326 ,426, 526: vapor or gas stripping stream generating means or reboiler
- 128, 228, 328, 428, 528: second cooling device
- 130, 230, 330, 430, 530: phase separation device
- 132, 232, 332, 432, 532: gaseous carbon dioxide rich gas stream discharging means
- 134, 234, 334, 434, 534: liquid condensate stream discharging means
- 136, 236, 336, 436, 536: third cooling device
- 238, 538: first air stream introducing means
- 240, 540: first preheated air stream discharging means
- 338, 542: second air stream introducing means
- 340, 544: second preheated air stream discharging means
- 438, 546: third air stream introducing means
- 440, 548: third preheated air stream discharging means
- 242, 550: first preheated air stream supplying means
- 342, 552: second preheated air stream supplying means
- 442, 554: third preheated air stream supplying means

## Claims

1. Process for producing a carbon dioxide depleted synthesis gas product by steam reforming of a hydrocarbon-containing feed gas, comprising the following steps:
(a) providing a feed gas stream containing gaseous or vaporized hydrocarbons, preferably natural gas or naphtha;
(b) introducing the feed gas stream heated to a steam reforming inlet temperature into a main reforming stage, reacting the feed gas stream in the main reforming stage under steam reforming conditions in a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace (202, 302, 402, 502), the interior of which is heated by means of a plurality of burners by burning at least one fuel gas with a preheated air stream as oxidant to form a flue gas stream, discharging said flue gas stream from said reformer furnace (202, 302, 402, 502);
(c) discharging the crude synthesis gas stream from the main reforming stage and introducing the crude synthesis gas stream into a first cooling device (214, 314, 414, 514), cooling the crude synthesis gas stream in the first cooling device (214, 314, 414, 514) in indirect heat exchange with a first coolant stream, discharging the cooled crude synthesis gas stream from the first cooling device (214, 314, 414, 514);
(d) introducing the cooled crude synthesis gas stream and/or the flue gas stream, preferably the flue gas stream after at least one cooling step, into a carbon dioxide absorption column (216, 316, 416, 516) operating by means of a physical or chemical carbon dioxide absorption process, bringing the cooled crude synthesis gas stream in the carbon dioxide absorption column (216, 316, 416, 516) into contact with a liquid carbon dioxide selective absorbent stream fed to the carbon dioxide absorption column (216, 316, 416, 516), discharging a carbon dioxide depleted synthesis gas product stream as the overhead product of the carbon dioxide absorption column (216, 316, 416, 516) and discharging a carbon dioxide loaded absorbent stream as the bottom product of the carbon dioxide absorption column (216, 316, 416, 516);
(e) introducing the carbon dioxide loaded absorbent stream into an absorbent regeneration column (224, 324, 424, 524), contacting the carbon dioxide loaded absorbent stream in the absorbent regeneration column (224, 324, 424, 524) with a hot vapor or gas stripping stream, discharging a carbon dioxide enriched hot vapor stream or gas stream as the overhead product of the absorbent regeneration column (224, 324, 424, 524) and a carbon dioxide depleted hot absorbent stream as the bottoms product of the absorbent regeneration column (224, 324, 424, 524);
(f) introducing the carbon dioxide enriched hot vapor stream or gas stream into a second cooling device (228, 328, 428, 528), cooling the carbon dioxide enriched hot vapor stream or gas stream in the second cooling device (228, 328, 428, 528) in indirect heat exchange with a second coolant stream, discharging the carbon dioxide enriched cooled vapor stream or gas stream and a liquid condensate stream from the second cooling device (228, 328, 428, 528),
(g) introducing the carbon dioxide enriched cooled vapor stream or gas stream and the liquid condensate stream into a phase separation device (230, 330, 430, 530), discharging a gaseous carbon dioxide rich gas stream from the phase separation device (230, 330, 430, 530), discharging the liquid condensate stream from the phase separation device (230, 330, 430, 530), and at least partially recycling the liquid condensate stream to the absorbent regeneration column (224, 324, 424, 524);
(h) introducing the carbon dioxide depleted hot absorbent stream into a third cooling device (236, 336, 436, 536), cooling the carbon dioxide depleted hot absorbent stream in the third cooling device (236, 336, 436, 536 ) in indirect heat exchange with a third coolant stream, discharging the carbon dioxide depleted cooled absorbent stream from the third cooling device (236, 336, 436, 536); at least partially recycling the carbon dioxide depleted cooled absorbent stream as a cooled carbon dioxide selective absorbent stream to the carbon dioxide absorption column (216, 316, 416, 516);
(i) wherein at least one coolant stream selected from the group comprising:
first coolant stream, second coolant stream, third coolant stream,
is formed by at least one air stream which is preheated when passing through the cooler or coolers and is fed as a preheated air stream as oxidant to step (b).

2. Process according to claim 1, **characterized in that**, between step (d) and (e), the carbon dioxide loaded absorbent stream is heated in indirect heat exchange against the carbon dioxide depleted hot absorbent stream before being introduced into the absorbent regeneration column (224, 324, 424, 524), the carbon dioxide-depleted hot absorbent stream being cooled and passed on to step (h).

3. Process according to claim 1 or 2, **characterized in that** the at least one preheated air stream is further heated by indirect heat exchange, preferably multistage indirect heat exchange with the flue gas stream, before it is passed as oxidant to step (b).

4. Process according to any one of the preceding claims, **characterized in that** the contacting of the carbon dioxide loaded absorbent stream in the absorbent regeneration column (224, 324, 424, 524) in step (e) is carried out with a hot vaporous stripping agent stream generated as inherent vapor in the bottom of the absorbent regeneration column (224, 324, 424, 524) by means of a reboiler (226, 326, 426, 526).

5. Process according to any one of the preceding claims, **characterized in that** between step (c) and (d) the cooled crude synthesis gas stream is introduced into a carbon monoxide shift conversion stage and is converted with a stream of steam under carbon monoxide shift conversion conditions into a shift converted synthesis gas stream enriched in hydrogen and carbon dioxide and depleted in carbon monoxide, wherein the shift converted synthesis gas stream is introduced into a fourth cooling device and is cooled therein in indirect heat exchange with a fourth coolant stream, wherein the cooled converted synthesis gas stream is discharged from the fourth cooling device and is introduced into the carbon dioxide absorption column (216, 316, 416, 516) instead of the cooled crude synthesis gas stream in step (d).

6. Process according to claim 5, **characterized in that** the fourth coolant stream is formed by at least one air stream which is preheated in the process and is fed as a preheated air stream as oxidant to step (b).

7. Process according to any one of the preceding claims, **characterized in that**, between steps (a) and (b), the hydrocarbon containing feed gas is first introduced into a pre-reformer, in which the hydrocarbon containing feed gas is converted under pre-reforming conditions to a pre-reformed hydrocarbon containing feed gas, and the pre-reformed hydrocarbon-containing feed gas is then fed to step (b).

8. Process according to any of the preceding claims, **characterized in that** the feed gas containing hydrocarbons is subjected to a desulfurization step, preferably a hydrodesulfurization step (HDS), prior to reaction in the pre-reforming stage and/or in the main reforming stage.

9. Process according to any one of the preceding claims, **characterized in that** an absorbent is used according to the following alternatives:
(a) a chemical absorbent, preferably an amine containing chemical absorbent, most preferably a methyldiethanolamine (MDEA) containing chemical absorbent; or
(b) a physical absorbent, preferably methanol, most preferably methanol that has been cooled below ambient temperature.

10. Plant (200, 300, 400, 500) for producing a carbon dioxide depleted synthesis gas product by steam reforming of a hydrocarbon-containing feed gas, comprising the following assemblies and components in fluid connection with each other:
(a) means (204, 304, 404, 504) for providing a feed gas stream containing gaseous or vaporized hydrocarbons, preferably natural gas or naphtha;
(b) a main reforming stage comprising a plurality of reformer tubes filled with a solid particulate reforming catalyst and arranged in a reformer furnace (202, 302, 402, 502), the interior of which is heatable by means of a plurality of burners by burning at least one fuel gas with a preheated air stream as an oxidant to form a flue gas stream,
means for introducing the feed gas stream heated to a steam reforming inlet temperature into the main reforming stage;
means for discharging a crude synthesis gas stream from the main reforming stage,
means (212, 312, 412, 512) for discharging the flue gas stream from said reformer furnace (202, 302, 402, 502);
(c) a first cooling device (214, 314, 414, 514) suitable for cooling the crude synthesis gas stream in indirect heat exchange with a first coolant stream,
means for introducing the crude synthesis gas stream into the first cooling device (214, 314, 414, 514)
means for discharging the cooled crude synthesis gas stream from the first cooling device (214, 314, 414, 514);
(d) a carbon dioxide absorption column (216, 316, 416, 516) suitable for performing a physical or chemical carbon dioxide absorption process,
means for introducing the cooled crude synthesis gas stream and/or the flue gas stream, preferably the flue gas stream after at least one cooling step, into the carbon dioxide absorption column (216, 316, 416, 516),
means (218, 318, 418, 518) for introducing a liquid, cooled, carbon dioxide selective absorbent stream into the carbon dioxide absorption column (216, 316, 416, 516),
means (220, 320, 420, 520) for discharging a carbon dioxide depleted syngas product stream as the overhead product of the carbon dioxide absorption column (216, 316, 416, 516) and means (222, 322, 422, 522) for discharging a carbon dioxide loaded absorbent stream as the bottom product of the carbon dioxide absorption column (216, 316, 416, 516);
(e) an absorbent regeneration column (224, 324, 424,524),
means for introducing the carbon dioxide loaded absorbent stream into the absorbent regeneration column (224, 324, 424,524),
means for introducing a hot vapor or gas stripping stream into the absorbent regeneration column (224, 324, 424, 524), and/or means (226, 326,426, 526) for generating a vapor or gas stripping stream in the absorbent regeneration column (224, 324, 424, 524),
means for discharging a carbon dioxide enriched hot vapor stream or gas stream as the overhead product of the absorbent regeneration column (224, 324, 424, 524) and means for discharging a carbon dioxide-depleted hot absorbent stream as the bottoms product of the absorbent regeneration column (224, 324, 424, 524);
(f) a second cooling device (228, 328, 428, 528) suitable for cooling the carbon dioxide enriched hot steam stream or gas stream in indirect heat exchange with a second coolant stream,
means for introducing the carbon dioxide enriched hot steam stream or gas stream into the second cooling device (228, 328, 428, 528),
means for discharging a carbon dioxide enriched cooled steam stream or gas stream and a condensate stream from the second cooling device (228, 328, 428, 528),
(g) a phase separation device (230, 330, 430, 530),
means for introducing the carbon dioxide enriched cooled steam stream or gas stream and the condensate stream into the phase separation device (230, 330, 430, 530),
means (232, 332, 432, 532) for discharging a gaseous carbon dioxide rich gas stream from the phase separation device (230, 330, 430, 530),
means (234, 334, 434, 534) for discharging a liquid condensate stream from the phase separation device (230, 330, 430, 530),
means for at least partially recycling the liquid condensate stream to the absorbent regeneration column (224, 324, 424, 524);
(h) a third cooling device (236, 336, 436, 536) suitable for cooling the carbon dioxide depleted hot absorbent stream in indirect heat exchange with a third coolant stream,
means for introducing the carbon dioxide depleted hot absorbent stream into the third cooling device (236, 336, 436, 536),
means for discharging the carbon dioxide depleted cooled absorbent stream from the third cooling device (236, 336, 436, 536),
means for at least partially recycling the carbon dioxide depleted, cooled absorbent stream as a cooled, carbon dioxide selective absorbent stream to the carbon dioxide absorption column (216, 316, 416, 516);
(i) means (238, 338, 438, 538, 542, 546) for introducing at least one air stream into at least one cooling device selected from the group comprising:
first cooling device (214, 314, 414, 514), second cooling device (228, 328, 428, 528), third cooling device (236, 336, 436, 536),
means (240, 340, 440, 540, 544, 548) for discharging at least one preheated air stream from the at least one cooling device,
means (242, 342, 442, 550, 552, 554) for supplying the at least one preheated air stream as oxidant to the main reforming stage.

11. Plant (200, 300, 400, 500) according to claim 10, further comprising means for allowing the carbon dioxide loaded absorbent stream to be heated in indirect heat exchange against the carbon dioxide depleted hot absorbent stream prior to its introduction into the absorbent regeneration column (224, 324, 424,524), wherein the carbon dioxide depleted hot absorbent stream is cooled and fed to the third cooling device (236, 336, 436, 536).

12. Plant (200, 300, 400, 500) according to claim 10 or 11, further comprising means allowing the at least one preheated air stream to be further heated by indirect heat exchange, preferably multistage indirect heat exchange with the flue gas stream before being fed as oxidant to the main reforming stage.

13. Plant (200, 300, 400, 500) according to anyone of claims 10 to 12, **characterized in that** the absorbent regeneration column (224, 324, 424,524) comprises a reboiler (226, 326, 426, 526) for generating a vapor stream or gas stream in the bottom of the column (224, 324, 424,524) as a stripping agent stream.

14. Plant (200, 300, 400, 500) according to any one of claims 10 to 13, further comprising a carbon monoxide shift conversion stage arranged downstream of the main reforming stage and upstream of the carbon dioxide absorption column (216, 316, 416, 516).

15. Plant (200, 300, 400, 500) to any one of claims 10 to 14, further comprising a fourth cooling device arranged downstream of the carbon monoxide shift conversion stage and upstream of the carbon dioxide absorption column (216, 316, 416, 516), adapted to supply at least one air stream as a fourth cooling stream to the fourth cooling device.
